# FASCICULE DE BREVET EUROPEEN

(11) **EP 3 830 051 B1**
(45) Date de publication et mention de la délivrance du brevet: **18.09.2024**
(21) Numéro de dépôt: 19745630.4
(22) Date de dépôt: 02.08.2019
(51) Int. Cl.: C04B 28/00, C04B 28/26, C04B 7/12, C04B 14/10, C04B 14/12, C04B 40/00, C04B 103/00

(54) **UTILISATION D'UNE ARGILE POUR LA PRÉPARATION D'UN PRÉCURSEUR DE GÉOPOLYMÈRE**
VERWENDUNG EINES TONS ZUR HERSTELLUNG EINES GEOPOLYMERVORLÄUFERS
USE OF A CLAY IN THE PREPARATION OF A GEOPOLYMER PRECURSOR

(30) Priorité: 03.08.2018 FR 1857274
(43) Date de publication de la demande: 09.06.2021
(73) Titulaire: Vicat, 92095 Paris La Défense (FR)
(72) Inventeur: MONTAZEAUD, Benoit, 38200 VIENNE (FR); BARNES-DAVIN, Laury, 38500 VOIRON (FR)
(74) Mandataire: Germain Maureau
(86) Numéro de dépôt international: PCT/EP2019/070861
(87) Numéro de publication internationale: WO 2020/025784

(56) Documents cités:
- EP-A1- 2 727 894
- EP-A1- 3 078 425
- BUCHWALD A ET AL: "The suitability of thermally activated illite/smectite clay as raw material for geopolymer binders", vol. 46, no. 3, 2009, pages 300 - 304, XP002675980, ISSN: 0169-1317, Retrieved from the Internet <URL:http://www.sciencedirect.com/science/article/pii/S016913170900221X> [retrieved on 20090904], DOI: 10.1016/J.CLAY.2009.08.026
- SEIFFARTH T ET AL: "Effect of thermal pre-treatment conditions of common clays on the performance of clay-based geopolymeric binders", APPLIED CLAY SCIENCE, ELSEVIER, AMSTERDAM, NL, vol. 73, 11 October 2012 (2012-10-11), pages 35 - 41, XP028529731, ISSN: 0169-1317, DOI: 10.1016/J.CLAY.2012.09.010
- C DUPUY ET AL: "Alkali-Activated Materials Based on Callovo-Oxfordian Argillite: Formation, Structure and Mechanical Properties", J. CERAM. SCI. TECHNOL, June 2018 (2018-06-01), pages 127 - 140, XP055625533, Retrieved from the Internet <URL:https://www.ceramic-science.com/articles/all-articles.html?article_id=100648&doi=10.4416/JCST2017-00086> [retrieved on 20190924], DOI: 10.4416/JCST2017-00086
- M MONSIF ET AL: "The implementation of geopolymers materials from Moroccan clay, within the framework of the valorization of the local natural resources", JOURNAL OF MATERIALS AND ENVIRONMENTAL SCIENCE, 2017, pages 2704 - 2721, XP055625218, Retrieved from the Internet <URL:http://jmaterenvironsci.com/Document/vol8/vol8_N8/290-JMES-Monsif.pdf> [retrieved on 20190924]
- LIS GUIMARAES DE AZEREDO MELO ET AL: "Physicochemical Characterization of Pulverized Phyllite Rock for Geopolymer Resin Synthesis", MATERIALS RESEARCH, vol. 20, no. suppl 2, 6 July 2017 (2017-07-06), BR, pages 236 - 243, XP055571565, ISSN: 1516-1439, DOI: 10.1590/1980-5373-mr-2016-0968
- S. LOUATI ET AL: "Geopolymers Based on Phosphoric Acid and Illito-Kaolinitic Clay", ADVANCES IN MATERIALS SCIENCE AND ENGINEERING, vol. 2016, 2016, pages 1 - 7, XP055571651, ISSN: 1687-8434, DOI: 10.1155/2016/2359759

## Description

La présente invention a pour objet l'utilisation d'une argile pour la préparation d'un précurseur de géopolymère.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires.

Les ciments les plus répandus sont les ciments de type Portland. Les ciments Portland sont obtenus à partir de clinker Portland, obtenus après clinkérisation à une température de l'ordre de 1450°C d'un cru riche en carbonate de calcium dans un four. La production d'une tonne de ciment Portland s'accompagne de l'émission de très importantes quantités de CO2 (environ 0,8 à 0,9 tonnes de CO2 par tonne de ciment dans le cas d'un CEM I).

Or, en 2014, la quantité de ciment vendu dans le monde avoisinait les 4.2 milliards de tonnes (source : Syndicat Français de l'Industrie Cimentière - SFIC). Ce chiffre, en constante augmentation, a plus que doublé en 15 ans. Le développement de ciments alternatifs avec une empreinte carbone plus faible fait l'objet de nombreuses recherches.

Dans ce contexte, et au cours de ces dernières années, une famille de liants non hydrauliques mais activés par une solution chimique, les géopolymères, est apparue comme une possible solution à la réduction de l'impact carbone des matériaux de construction.

Les géopolymères sont obtenus par l'association de deux constituants :
- un solide sous forme de poudre appelé « précurseur » ; et
- une solution d'activation habituellement appelée « activateur ».

Ces matériaux de construction possèdent une résistance à long terme comparable à celle des matériaux de construction préparés à partir des ciments Portland classiques, et peuvent être préparés en limitant significativement les émissions de CO₂.

Dans les articles de Buchwald et al., "The suitability of thermally activated illite/smectite clay as raw material for geopolymer binders", Applied Clay Science, vol. 46, no. 3, 2009, pages 300-304; de Seiffarth et al., "Effect of thermal pre-treatment conditions of common clays on the performance of clay-based geopolymeric binders" Applied Clay Science, vol. 73, 11 octobre 2012, pages 35-41; et de Dupuy et al., "Alkali-Activated Materials Based on Callovo-Oxfordian Argillite: Formation, Structure and Mechanical Properties", J. Ceram. Sci. Technol, juin 2018, pages 127-140, les auteurs étudient l'utilisation d'argiles contenant de la kaolinite, de la smectite et/ou de la muscovite/illite traités thermiquement comme précurseurs de géopolymères. De même, la demande de brevet EP-A-3078425 décrit diverses utilisations d'argiles contenant de la kaolinite, de la smectite et/ou de la muscovite/illite traités thermiquement, notamment comme précurseurs de géopolymères.

La kaolinite est une argile de formule ASH₂ où A représente l'alumine Al₂O₃, S représente la silice SiO₂ et H représente l'eau H₂O. Sa structure cristallographique est organisée en feuillets de silice et d'alumine reliés entre eux par des molécules d'eau.

Lorsque la kaolinite est portée à une température de 500°C à 700°C, ses molécules d'eau sont éliminées sous forme de vapeur d'eau, ce qui entraine plusieurs conséquences en termes de structure et de réactivité, parmi lesquelles :
- disparition de l'organisation en feuillets avec pour conséquence l'introduction d'un désordre structurel (on parle d'amorphisation) ; et
- augmentation très importante de la surface spécifique blaine pouvant atteindre plusieurs dizaines de fois celle d'un ciment classique.

La calcination d'argiles kaoliniques permet l'obtention d'un matériau classiquement désigné par « métakaolin ». Le métakaolin est bien connu de l'homme du métier et constitue notamment un ajout pour le béton reconnu normativement au même titre que la fumée de silice. Le métakaolin est notamment utilisé comme précurseur de géopolymères.

Néanmoins, la calcination de la kaolinite permettant d'obtenir le métakaolin est énergivore et donc coûteuse. En outre, le métakaolin ne peut être trouvé qu'en quantité limité et son prix est donc élevé.

Pour pallier cette difficulté, l'utilisation d'argile naturelle pauvre en kaolinite et disponible en plus grande quantité pour la préparation de précurseurs de géopolymères par calcination a été testée. Cependant, les matériaux finalement obtenus présentent des performances mécaniques peu satisfaisantes, et cette solution est peu privilégiée à la date de la présente invention.

Or, il a maintenant été trouvé de façon tout à fait surprenante que des argiles ayant des teneurs en kaolinites largement inférieures à 35% mais riches en muscovite et/ou illite et contenant en outre de la smectite pouvaient, une fois calcinées, être utilisées comme précurseur de géopolymère, et que les géopolymères préparés à partir de ce précurseur, seul ou combiné avec un autre précurseur classiquement utilisé, possèdent une résistance à long terme comparable à celle des matériaux de construction préparés à partir des ciments Portland classiques ou de géopolymères obtenus à partir d'argiles riches en kaolinites.

Ainsi, la présente invention a pour objet l'utilisation d'une argile comprenant :
- moins de 30% de kaolinite ;
- au moins 20% de muscovite et/ou illite ; et
- de 1% à 20% de smectite ;
- le rapport en poids muscovite et/ou illite / kaolinite étant supérieur à 1 ;
pour la préparation d'un précurseur de géopolymère.

Les argiles riches en muscovite et/ou illite et contenant en outre de la smectite, mais ayant des teneurs en kaolinites largement inférieures à 35% décrites ci-dessus peuvent, une fois calcinées, être utilisées comme précurseur de géopolymères. Les géopolymères préparés à partir de ce précurseur, seul ou combiné avec un autre précurseur classiquement utilisé, possèdent une résistance à long terme comparable à celle des matériaux de construction préparés à partir des ciments Portland classiques ou de géopolymères obtenus à partir d'argiles riches en kaolinites. En outre, la calcination des argiles selon l'invention est moins énergivore que celle des argiles riches en kaolinites.

Dans le cadre de la présente invention :
- on entend par « argile » toute matière naturelle riche en alumine et en silice, essentiellement constituée de silicates et de phylosilicates ;
- on entend par « muscovite » le minéral de la famille des phylosilicates de formule KAl₂(AlSi₃O₁₀)(OH,F)₂ ;
- on entend par « illite » le minéral de la famille des phylosilicates de formule (K,H₃O)(Al,Mg,Fe)₂(Si,Al)₄O₁₀[(OH)₂,(H₂O)] ;
- on entend par « kaolinite » le minéral de la famille des phylosilicates de formule Al₂Si₂O₅(OH)₄ ;
- on entend par « smectite » le minéral de la famille des phylosilicates de formule type A_{0,3}D₂₋₃T₄O₁₀Z₂·nH₂O, où A représente un cation interfoliaire (élément alcalin ou alcalino-terreux), D un cation octaédrique, T un cation tétraédrique, O l'oxygène et Z un anion monovalent (généralement OH⁻). Comme exemple de smectite on peut notamment citer la montmorillonite ;
- on entend par « calcite » un polymorphe du carbonate de calcium CaCO₃ ;
- on entend par « dolomite » le carbonate de magnésium MgCO₃ ;
- on entend par « microcline » le minéral de la famille des tectosilicates de formule KAlSi₃O₈ ;
- on entend par « hématite » l'oxyde de fer (III) Fe₂O₃ ;
- on entend par « phase amorphe » la fraction non ou mal diffractante du matériau. En diffraction des rayons X, seules les espèces diffractantes peuvent être identifiées et quantifiées via la méthode de Rietveld en utilisant la méthode des standards internes ou externes ;
- on entend par « précurseur de géopolymère » tout matériau susceptible d'être solubilisé par une solution d'activation constituée d'un silicate (notamment un silicate de sodium ou de potassium) et/ou de d'un alcalin (notamment la soude ou la potasse), ou d'un acide (notamment l'acide phosphorique), en monomères aluminates et silicates pouvant conduire à un géopolymère par polycondensation ; et
- on entend par « géopolymère » tout matériau aluminosilicate alcalin, matériau alcaliactivé ou polymère inorganique, obtenu par la réaction d'un précurseur aluminosilicate et d'une solution d'activation constituée d'un silicate (notamment un silicate de sodium ou de potassium) et/ou d'un alcalin (notamment la soude ou la potasse), ou d'un acide (notamment l'acide phosphorique). La solution d'activation permet la dissolution du précurseur aluminosilicate en monomères aluminates et silicates qui polycondensent en un matériau inorganique.

Dans le cadre de la présente invention, le diamètre médian ou d50 correspond au diamètre en-dessous duquel se trouve 50% de la masse totale des particules de l'échantillon considéré. Celui-ci peut être déterminé par toute méthode connue de l'homme du métier, notamment par granulométrie laser en voie sèche ou humide.

Enfin, dans le cadre de la présente invention, les proportions exprimées en % correspondent à des pourcentages massiques par rapport au poids total de l'entité considérée.

La présente invention a donc pour objet l'utilisation d'une argile possédant les caractéristiques minéralogiques décrites ci-avant pour la préparation d'un précurseur de géopolymère. De préférence, la présente invention a pour objet l'utilisation d'une argile telle que définie précédemment pour la préparation d'un précurseur de géopolymère, ladite argile possédant les caractéristiques suivantes, choisies seules ou en combinaison :
- l'argile contient moins de 25% de kaolinite, de préférence encore moins de 20% de kaolinite, de façon tout à fait préférée moins de 15% de kaolinite ;
- l'argile contient au moins de 25% de muscovite et/ou illite, de préférence encore de 25% à 50% de muscovite et/ou illite, de façon tout à fait préférée de 25% à 40% de muscovite et/ou illite ;
- le rapport en poids muscovite et/ou illite / kaolinite dans l'argile utilisée est supérieur à 1, de façon tout à fait préférée supérieur à 2 ;
- l'argile contient de 2% à 17% de smectite, de préférence 3% à 15% de smectite, de façon tout à fait préférée de 5% à 10% de smectite ;
- l'argile contient en outre au moins 1% de calcite, de préférence au moins 2% de calcite, de façon tout à fait préférée de 3% à 5% de calcite ;
- l'argile contient en outre une phase amorphe contenant de la silice, de l'alumine et/ou du calcium. De préférence, l'argile contient de 1% à 20% de ladite phase amorphe. De préférence encore, l'argile contient de 3% à 10% de ladite phase amorphe ; et/ou
- l'argile contient en outre de la chlorite, du quartz, de la dolomite, de la microcline et/ou de l'hématite.

L'argile décrite ci-avant peut donc être utilisée pour préparer un précurseur de géopolymère par calcination. Ainsi, la présente invention a également pour objet un procédé de préparation d'un précurseur de géopolymère à partir de l'argile décrite précédemment, ledit procédé comprenant les étapes suivantes :
- éventuel séchage puis éventuel broyage de l'argile ;
- calcination du matériau obtenu à une température comprise entre 650°C et 900°C ; et
- éventuelle désagglomération de l'argile calcinée obtenue, par exemple par broyage, jusqu'à atteindre un diamètre médian de 10 µm à 20 µm.

Lors de l'éventuel broyage de l'argile avant calcination, celui-ci est effectué de préférence en vue d'obtenir une poudre de 100% de passant à 2 mm.

L'étape de calcination peut être conduite à l'aide d'un calcinateur rotatif, au sein duquel celle-ci dure environ 30 à 90 minutes. Cependant, un « calcinateur flash » peut également être utilisé pour calciner l'argile en vue d'obtenir un précurseur de géopolymère, auquel cas l'étape de calcination est très brève (1 à 2 secondes, voire moins). Le fait qu'un calcinateur flash puisse être utilisé permet de réduire considérablement l'énergie nécessaire à la calcination et à la préparation du précurseur de géopolymère.

Lors de l'éventuel broyage de l'argile calcinée, celui-ci est effectué jusqu'à atteindre un diamètre médian inférieur ou égal à 25 µm, de préférence encore inférieur ou égal à 20 µm, de façon tout à fait préférée inférieur ou égal à 15 µm.

La présente invention peut être illustrée de façon non limitative par les exemples suivants.

### Exemple 1 - Calcination de l'argile

### 1.1 - Composition de l'argile

Une argile brute possédant la composition minéralogique rapportée dans le Tableau 1 suivant est utilisée.

**Tableau 1 - Composition minéralogique de l'argile avant calcination**

| **Catégorie** | **Phase** | **% (p/p)** |
|---|---|---|
| **Argiles** | Muscovite/Illite | 39.8 |
| | Kaolinite | 14.9 |
| | Chlorite | 5.6 |
| | Smectite | 7.9 |
| **Carbonates** | Calcite | 4.1 |
| | Dolomite | 5.4 |
| **Autres** | Quartz | 12.2 |
| | Hématite | 1 |
| | Albite | 0.4 |
| | Anatase | 2.1 |
| | Microcline | 2.3 |
| **Amorphes** | | 4.3 |

L'argile ci-dessus possède la composition chimique (en % (p/p)) rapportée dans le Tableau 2 suivant.

**Tableau 2 - Composition chimique de l'argile avant calcination**

| **SiO₂** | **Al₂O₃** | **Fe₂O₃** | **CaO** | **MgO** | **SO₃** | **K₂O** | **Na₂O** | **SrO** | **TiO₂** | **P₂O₅** | **MnO** | **Perte au feu** |
|---|---|---|---|---|---|---|---|---|---|---|---|---|
| 47.79 | 20.94 | 6.16 | 4.24 | 2.90 | 0.08 | 2.75 | 0.26 | 0.02 | 0.99 | 0.08 | 0.04 | 13.83 |

L'argile utilisée présente en outre les caractéristiques physiques rapportées dans le Tableau 3 suivant.

**Tableau 3 - Caractéristiques physiques de l'argile avant calcination**

| **Masse volumique (en g/cm³)** | | 2.6 |
|---|---|---|
| **Surface spécifique** | **Blaine (en cm²/g)** | 2300 |
| | **BET (en m²/g)** | 43.9 |

### 1.2 - Calcination de l'argile

### 1.2.1 - En four de laboratoire

L'argile décrite ci-dessus est séchée durant 12 heures à 105°C puis broyée au broyeur à anneau jusqu'à un diamètre médian de 30 à 40 µm. La poudre ainsi préparée est cuite en four de laboratoire par lots de 200 g à 800°C durant 1h00 avec enfournement et défournement à chaud. L'argile calcinée ainsi obtenue (argile calcinée AC-1) est ensuite à nouveau broyée légèrement au broyeur planétaire (15 secondes, 700 tr/min) pour la désagglomérer et obtenir un diamètre médian de 20 µm.

### 1.2.2 - En calcinateur flash

L'argile décrite ci-dessus est séchée durant 72 heures à 105°C puis concassée au concasseur à mâchoires jusqu'à obtention de 100% de passant à 2 mm. La poudre ainsi préparée est ensuite calcinée dans un calcinateur flash à 625°C (argile calcinée ACF-1), 780°C (argile calcinée ACF-2), 870°C (argile calcinée ACF-3) ou 875°C sous atmosphère réductrice (argile calcinée ACF-4) avec un temps de séjour moyen de 1 à 2 secondes. L'argile calcinée ainsi obtenue est ensuite à nouveau broyée au broyeur vertical pour la désagglomérer et obtenir un diamètre médian de 10-11 µm.

Les argiles calcinées ainsi obtenues sont analysées. La composition minéralogique (en % (p/p)) de celles-ci est rapportée dans le tableau 4 suivant.

**Tableau 4 - Composition minéralogique des argiles calcinées ACF-1 à ACF-4**

| **Catégorie** | **Phase** | **ACF-1** | **ACF-2** | **ACF-3** | **ACF-4** |
|---|---|---|---|---|---|
| **Argiles** | Muscovite/Illite | 26.4 | 24.8 | 17.6 | 17.2 |
| | Kaolinite | 5.8 | 2.5 | - | - |
| | Chlorite | 3.1 | - | - | - |
| **Carbonates** | Calcite | 3.3 | 3 | 1.7 | 2.1 |
| | Dolomite | 1.1 | 0.2 | - | - |
| **Autres** | Quartz | 10.7 | 11.8 | 12.1 | 11.9 |
| | Hématite | 1.7 | 1.8 | 1.9 | 1.6 |
| | Microcline | 4.2 | 3.5 | 2.3 | 2.3 |
| | Chaux libre | - | 0.5 | 0.5 | 0.4 |
| | Périclase | - | 0.5 | 0.4 | 0.4 |
| **Amorphes** | | 43.8 | 51.3 | 63.4 | 64 |

### Exemple 2 - Compositions de mortier

### Préparation des mortiers 1 à 10

Dans cet exemple, le précurseur de géopolymère est l'argile calcinée ACF-3.

Un mortier de référence (ci-après Mortier 1) est préparé à partir d'un ciment Portland CEM Il 32.5 selon la norme EN 196-1. La composition du mortier 1 est la suivante :
- 450g de ciment CEM Il 32.5 ;
- 1350g de sable normalisé ; et
- 225g d'eau.

Les mortiers 2 à 10 ont quant à eux été préparés à partir 506 à 570 ml de liant géopolymère et 1350g de sable normalisé, la composition de liant géopolymère étant la suivante :
- 561 ml - 54% de ACF -3 / 9% de SiO₂ / 8% de Na₂O / 29% d'eau (mortier 2) ;
- 523 ml - 51% de ACF -3 / 9% de SiO₂ / 7% de Na₂O / 33% d'eau (mortier 3) ;
- 506 ml - 49% de ACF -3 / 11% de SiO₂ / 10% de Na₂O / 31% d'eau (mortier 4) ;
- 566 ml - 53% de ACF -3 / 7% de SiO₂ / 9% de Na₂O / 31% d'eau (mortier 5) ;
- 547 ml - 56% de ACF -3 / 6% de SiO₂ / 8% de Na₂O / 30% d'eau (mortier 6) ;
- 558 ml - 57% de ACF -3 / 8% de SiO₂ / 5% de Na₂O / 30% d'eau (mortier 7) ;
- 570 ml - 52% de ACF -3 / 11% de SiO₂ / 8% de Na₂O / 28% d'eau (mortier 8) ;
- 554 ml - 55% de ACF -3 / 8% de SiO₂ / 8% de Na₂O / 29% d'eau (mortier 9) ; et
- 557 ml - 56% de ACF -3 / 10% de SiO₂ / 6% de Na₂O / 29% d'eau (mortier 10).

### Résistance mécanique

La résistance mécanique des mortiers est mesurée conformément à la norme EN 196-1 sur des éprouvettes de mortiers prismatiques 4x4x16 cm3 préparés à 20°C.

Les résultats des mesures de la résistance en compression (Rc) à 7 jours sont rapportés dans le tableau 5 suivant.

**Tableau 5 - Résistances à la compression**

| **Mortier** | **Résistance à la compression à 7 jours ( en MPa)** |
|---|---|
| 1 (référence) | 30 |
| 2 | 20.6 |
| 3 | 18 |
| 4 | 10 |
| 5 | 12.3 |
| 6 | 19.3 |
| 7 | 20.4 |
| 8 | 18.6 |
| 9 | 18.1 |
| 10 | 28.7 |

Il apparaît que les mortiers préparés à partir d'un géopolymère obtenu à partir d'une quantité suffisante d'argile calcinée (mortiers 2, 3, 6 7, 8, 9 et 10) possèdent une résistance mécanique à 28 jours comparable à celle du mortier préparé à partir du seul ciment Portland (mortier 1) et comparable à celle du mortier préparé à partir d'un ciment Portland.

### Exemple 3 - Compositions de mortier

### Préparation des mortiers 11 à 16

Dans cet exemple, le précurseur de géopolymère est un mélange d'argile calcinée ACF-3 et de métakaolin (MK) dans les proportions suivantes :
- 55% d'ACF-3 ; et
- 45% de métakaolin

Les mortiers 11 à 16 ont été préparés à partir 506 à 598 ml de liant géopolymère et 1350g de sable normalisé, la composition de liant géopolymère étant la suivante :
- 598 ml - 51% de MK / 7% de SiO₂ / 9% Na₂O / 33% eau (mortier 11 - référence) ;
- 563 ml - 54% de MK+ACF-3 / 9% de SiO₂ / 8% Na₂O / 29% eau (mortier 12) ;
- 506 ml - 52% de MK+ACF-3 / 9% de SiO₂ / 7% Na₂O / 31% eau (mortier 13) ;
- 570ml - 52% de MK+ACF-3 / 12% de SiO₂ / 8% Na₂O / 29% eau (mortier 14) ;
- 553 ml - 55% de MK+ACF-3 / 8% de SiO₂ / 8% Na₂O / 29% eau (mortier 15) ; et
- 566 ml - 56% de MK+ACF-3 / 10% de SiO₂ / 6% Na₂O / 29% eau (mortier 16).

### Résistance mécanique

La résistance mécanique des mortiers est mesurée sur des éprouvettes de mortiers prismatiques 4x4x16 cm3 préparés à 20°C selon la norme EN 196-1.

Les résultats des mesures de la résistance en compression (Rc) sont rapportés dans le tableau 6 suivant.

**Tableau 6 - Résistances à la compression**

| **Mortier** | **Résistance à la compression à 7 jours (en MPa)** |
|---|---|
| 11 (référence) | 41.2 |
| 12 | 48.4 |
| 13 | 43.3 |
| 14 | 50.0 |
| 15 | 43.5 |
| 16 | 39.8 |

Il apparait que les mortiers préparés à partir d'un géopolymère obtenu à partir d'un mélange métakaolin et argile calcinée (mortiers 12 à 16) possèdent une résistance mécanique à 7 jours supérieure à celle d'un mortier préparé à partir d'un géopolymère obtenu à partir du seul métakaolin (mortier 11).

### Exemple 4 - Essais comparatifs

Une argile brute possédant la composition minéralogique rapportée dans le Tableau 7 suivant est utilisée.

**Tableau 7 - Composition minéralogique de l'argile avant calcination**

| **Catégorie** | **Phase** | **% (p/p)** |
|---|---|---|
| **Argiles** | Muscovite/Illite | 60.2 |
| | Kaolinite | 16.2 |
| | Chlorite | 0 |
| | Smectite | 0 |
| **Carbonates** | Calcite | 5.4 |
| | Dolomite | 0.2 |
| **Autres** | Quartz | 1.9 |
| | Hématite | 0 |
| | Albite | 0.8 |
| | Anatase | 0.1 |
| | Microcline | 15.2 |
| **Amorphes** | | 0 |

Cette argile ne contient donc pas de smectite.

Cette argile est calcinée dans les conditions décrites pour l'argile ACF-3 (voir exemple 1 - point 1.2). L'argile calcinée ACF-5 est ainsi obtenue.

Les mortiers 17 à 19 ont été préparés à partir 506 à 598 ml de liant géopolymère et 1350g de sable normalisé, la composition de liant géopolymère étant la suivante :
- 563 ml - 54% de ACF-5 / 9% de SiO₂ / 8% Na₂O / 29% eau (mortier 17) ;
- 506 ml - 52% de ACF-5 / 9% de SiO₂ / 7% Na₂O / 31% eau (mortier 18) ; et
- 570ml - 52% de ACF-5 / 12% de SiO₂ / 8% Na₂O / 29% eau (mortier 19).

### Résistance mécanique

La résistance mécanique des mortiers est mesurée sur des éprouvettes de mortiers prismatiques 4x4x16 cm3 préparés à 20°C selon la norme EN 196-1.

Les résultats des mesures de la résistance en compression (Rc) sont rapportés dans le tableau 8 suivant.

**Tableau 8 - Résistances à la compression**

| **Mortier** | **Résistance à la compression à 7 jours (en MPa)** |
|---|---|
| 17 | <3.0 |
| 18 | <3.0 |
| 19 | <3.0 |

Il apparaît que les mortiers préparés à partir d'un géopolymère obtenu à partir de l'argile calcinée ACF-5 (mortiers 17 à 19) possèdent de très faibles résistances mécaniques. Ces résistances mécaniques sont inférieures au seuil de détection de la presse. Ces résistances sont très inférieures à celles obtenues sur un mortier composé de l'argile ACF-3.

## Revendications

1. Utilisation d'une argile comprenant :
- moins de 30% de kaolinite ; et
- au moins 20% de muscovite et/ou illite ;
- de 1% à 20% de smectite ;
- le rapport en poids muscovite et/ou illite / kaolinite étant supérieur à 1 ;
pour la préparation d'un précurseur de géopolymère.

2. Utilisation selon la revendication 1, **caractérisée en ce que** l'argile contient moins de 25% de kaolinite.

3. Utilisation selon la revendication 2, **caractérisée en ce que** l'argile contient moins de 20% de kaolinite.

4. Utilisation selon l'une quelconque des revendications 1 à 3, **caractérisée en ce que** l'argile contient au moins 25% de muscovite et/ou illite.

5. Utilisation selon la revendication 4, **caractérisée en ce que** l'argile contient de 25% à 50% de muscovite et/ou illite.

6. Utilisation selon l'une quelconque des revendications 1 à 5, **caractérisée en ce que** le rapport en poids muscovite et/ou illite / kaolinite dans l'argile utilisée est supérieur à 2.

7. Utilisation selon l'une quelconque des revendications 1 à 6, **caractérisée en ce que** l'argile contient de 2% à 17% de smectite.

8. Utilisation selon la revendication 7, **caractérisée en ce que** l'argile contient de 3% à 15% de smectite.

9. Utilisation selon l'une quelconque des revendications 1 à 8, **caractérisée en ce que** l'argile contient en outre au moins 1% de calcite.

10. Utilisation selon l'une quelconque des revendications 1 à 9, **caractérisée en ce que** l'argile contient de 15% à 55% de phase amorphe contenant de la silice, de l'alumine et/ou du calcium.

11. Utilisation selon la revendication 10, **caractérisée en ce que** l'argile contient de 20% à 50% de phase amorphe contenant de la silice, de l'alumine et/ou du calcium.

12. Utilisation selon l'une quelconque des revendications 1 à 11, **caractérisée en ce que** l'argile contient en outre de la chlorite, du quartz, de la dolomite, de la microcline et/ou de l'hématite.

13. Procédé de préparation d'un précurseur de géopolymère comprenant les étapes suivantes
- éventuel séchage puis éventuel broyage de l'argile selon l'une des revendications 1 à 12;
- calcination du matériau obtenu à une température comprise entre 650°C et 900°C ; et
- éventuelle désagglomération de l'argile calcinée obtenue jusqu'à atteindre un diamètre médian de 10 µm à 20 µm.

## Patentansprüche

1. Verwendung eines Tons, umfassend:
- weniger als 30 % Kaolinit; und
- mindestens 20 % Muskovit und/oder Illit;
- 1 % bis 20 % Smektit;
- wobei das Gewichtsverhältnis von Muskovit und/oder Illit zu Kaolinit größer als 1 ist;
zum Herstellen eines Geopolymer-Vorläufers.

2. Verwendung nach Anspruch 1, **dadurch gekennzeichnet, dass** der Ton weniger als 25 % Kaolinit enthält.

3. Verwendung nach Anspruch 2, **dadurch gekennzeichnet, dass** der Ton weniger als 20 % Kaolinit enthält.

4. Verwendung nach einem der Ansprüche 1 bis 3, **dadurch gekennzeichnet, dass** der Ton mindestens 25 % Muskovit und/oder Illit enthält.

5. Verwendung nach Anspruch 4, **dadurch gekennzeichnet, dass** der Ton 25 % bis 50 % Muskovit und/oder Illit enthält.

6. Verwendung nach einem der Ansprüche 1 bis 5, **dadurch gekennzeichnet, dass** das Gewichtsverhältnis von Muskovit und/oder Illit zu Kaolinit im verwendeten Ton größer als 2 ist.

7. Verwendung nach einem der Ansprüche 1 bis 6, **dadurch gekennzeichnet, dass** der Ton 2 % bis 17 % Smektit enthält.

8. Verwendung nach Anspruch 7, **dadurch gekennzeichnet, dass** der Ton 3 % bis 15 % Smektit enthält.

9. Verwendung nach einem der Ansprüche 1 bis 8, **dadurch gekennzeichnet, dass** der Ton ferner mindestens 1 % Calcit enthält.

10. Verwendung nach einem der Ansprüche 1 bis 9, **dadurch gekennzeichnet, dass** der Ton 15 % bis 55 % einer amorphen Phase enthält, die Siliciumdioxid, Aluminiumoxid und/oder Calcium enthält.

11. Verwendung nach Anspruch 10, **dadurch gekennzeichnet, dass** der Ton 20 % bis 50 % einer amorphen Phase enthält, die Siliciumdioxid, Aluminiumoxid und/oder Calcium enthält.

12. Verwendung nach einem der Ansprüche 1 bis 11, **dadurch gekennzeichnet, dass** der Ton ferner Chlorit, Quarz, Dolomit, Mikroklin und/oder Hämatit enthält.

13. Verfahren zum Herstellen eines Geopolymer-Vorläufers, umfassend die folgendes Schritte
- gegebenenfalls Trocknen und dann gegebenenfalls Zermahlen des Tons nach einem der Ansprüche 1 bis 12;
- Kalzinieren des erhaltenen Materials bei einer Temperatur zwischen 650 °C bis 900 °C; und
- gegebenenfalls Deagglomerieren des erhaltenen kalzinierten Tons, bis ein mittlerer Durchmesser von 10 µm bis 20 µm erreicht ist.

## Claims

1. Use of a clay comprising:
- less than 30% of kaolinite; and
- at least 20% of muscovite and/or illite;
- from 1% to 20% of smectite;
- the muscovite and/or illite / kaolinite weight ratio being greater than 1;
for the preparation of a geopolymer precursor.

2. The use according to claim 1, **characterized in that** the clay contains less than 25% of kaolinite.

3. The use according to claim 2, **characterized in that** the clay contains less than 20% of kaolinite.

4. The use according to any of claims 1 to 3, **characterized in that** the clay contains at least 25% of muscovite and/or illite.

5. The use according to claim 4, **characterized in that** the clay contains from 25% to 50% of muscovite and/or illite.

6. The use according to any of claims 1 to 5, **characterized in that** the muscovite and/or illite / kaolinite weight ratio in the used clay is greater than 2.

7. The use according to any of claims 1 to 6, **characterized in that** the clay contains from 2% to 17% of smectite.

8. The use according to claim 7, **characterized in that** the clay contains from 3% to 15% of smectite.

9. The use according to any of claims 1 to 8, **characterized in that** the clay further contains at least 1% of calcite.

10. The use according to any of claims 1 to 8, **characterized in that** the clay contains from 15% to 55% of an amorphous phase containing silica, alumina and/or calcium.

11. The use according to claim 10, **characterized in that** the clay contains from 20% to 50% of an amorphous phase containing silica, alumina and/or calcium.

12. The use according to any of claims 1 to 11, **characterized in that** the clay further contains chlorite, quartz, dolomite, microcline and/or hematite.

13. A method for preparing a geopolymer precursor comprising the following steps:
- possibly drying and then possibly grinding of the clay according to any one of claims 1 to 12;
- calcination of the obtained material at a temperature comprised between 650°C and 900°C; and
- possibly deagglomeration of the obtained calcined clay until reaching a median diameter from 10 µm to 20 µm.
